# EUROPÄISCHE PATENTSCHRIFT

(11) **EP 1 447 267 B1**
(45) Veröffentlichungstag und Bekanntmachung des Hinweises auf die Patenterteilung: **09.01.2008**
(21) Anmeldenummer: 04002102.4
(22) Anmeldetag: 31.01.2004
(51) Int. Cl.: B60N 3/10

(54) **Halter für einen Getränkebehälter**
Holder for a beverage container.
Support pour un conteneur à boisson.

(30) Priorität: 11.02.2003 DE 10305401
(43) Veröffentlichungstag der Anmeldung: 18.08.2004
(73) Patentinhaber: fischer automotive systems GmbH, 72160 Horb a.N. (DE)
(72) Erfinder: Leopold, Gunter, 72270 Baiersbronn (DE); Schröter, Bernd, 71263 Weil der Stadt (DE); Baier, Mareike, 71065 Sindelfingen (DE)

(56) Entgegenhaltungen:
- EP-A- 0 697 308
- EP-A- 0 800 954
- EP-A- 1 103 416
- EP-A2- 1 431 114
- US-A- 5 326 064
- US-B1- 6 412 861
- PATENT ABSTRACTS OF JAPAN Bd. 1997, Nr. 01, 31. Januar 1997 (1997-01-31) -& JP 08 238985 A (NISSAN MOTOR CO LTD), 17. September 1996 (1996-09-17)

## Beschreibung

Die Erfindung betrifft einen Halter für einen Getränkebehälter.

Derartige Halter sind an sich bekannt. Sie werden vielfach in Kraftwagen zum Halten von Getränkebehältern wie bspw. Bechern, Tassen oder Getränkedosen verwendet. Es sind bspw. Halter mit einer in etwa zylindrischen Vertiefung als Aufnahme zum Einstellen eines Getränkebehälters bekannt. Des weiteren sind Halter mit einem Haltering bekannt, der sich in einer Gebrauchslage oberhalb einer Stellfläche befindet. Zum Einstellen wird ein Getränkebehälter durch den Haltering hindurch auf die Stellfläche gestellt, wobei der Haltering den eingestellten Getränkebehälter in ungefähr mittlerer Höhe seitlich abstützt. Der Haltering und die Stellfläche bilden die Aufnahme eines solchen Halters. Dabei muss der Haltering nicht geschlossen sein, es genügt, wenn bspw. zwei bogenförmige Arme den Getränkebehälter auf Segmenten seines Umfangs umgreifen. Solche Halter weisen üblicherweise Mechaniken auf, mit denen sie bei Nichtgebrauch zusammenklapp- oder -legbar sind. Diese Aufzählung von Haltern für Getränkebehälter ist nicht vollständig.

Zum Ausgleich unterschiedlicher Durchmesser von Getränkebehältern ist es bekannt, Durchmesserausgleichselemente vorzusehen, die ein Stück weit seitlich in die Aufnahme hineinbewegbar sind, so dass eine lichte Weite der Aufnahme an einen einzustellenden Getränkebehälter anpassbar ist. So zeigt beispielsweise das Dokument EP 0 800 954 A2 einen topfförmigen Halter mit Backen als Durchmesserausgleichselemente, die radial durch Ausnehmungen in der Wandung in den Aufnahmeraum hineinragen. Sie sind mit einem Schwenk- und Linearlager am Halter angebracht und werden mit einem Federring radial nach innen gedrückt.

Den bekannten Haltern ist gemeinsam das Problem der Reinigung. Beim Einstellen eines Getränkebehälters in die Aufnahme oder durch Stöße während der Fahrt kann Flüssigkeit aus einem Getränkebehälter überschwappen und den Halter verschmutzen. Auch bildet oftmals Flüssigkeit an einer Außenseite eines Bodens eines Getränkebehälters einen unschönen Schmutzring in der Aufnahme eines Halters. Eine Reinigung im Kraftwagen ist umständlich, außerdem weisen die Aufnahmen der Halter teilweise schlecht zugängliche Ecken oder Stellen unter Hinterscheidungen auf.

Aus dem Dokument US-A-5,326,064 ist ein topfförmiger Halter bekannt, der beispielsweise in einen bereits im Fahrzeug einstellbaren Halter eingestellt werden kann. Zur Reinigung ist dieser Halter entnehmbar. Allerdings bietet dieser Halter keinen ausreichenden Schutz gegen Kippen bei unterschiedlich großen Getränkebehältern. Zwar sieht der Halter zwei axial übereinander angeordnete Abschnitte mit jeweils unterschiedlichem Innendurchmesser vor, jedoch führt dies dazu, dass beispielsweise Flaschen mit sehr großem Durchmesser nur von dem oberen Abschnitt des Halters gehalten werden und somit nur unzureichend gegen Kippen gesichert sind.

Weiterhin ist aus dem Dokument EP 1 431 114 A2, welches als Stand der Technik nach Artikel 54(3) und (4) EPÜ zu berücksichtigen ist, ein Halter mit einem entnehmbaren Auffangbehälter und einem Durchmesserausgleichselement bekannt. Allerdings weist die Führung dieser Durchmesserausgleichselemente Führungsbahnen auf.

Aufgabe der Erfindung ist es deswegen, einen Halter für einen Getränkebehälter vorzuschlagen, der sich einfach von aus einem eingestellten Getränkebehälter übergeschwappter Flüssigkeit reinigen lässt und Getränkebehältern unterschiedlicher Dimension sicheren Halt gibt.

Diese Aufgabe wird erfindungsgemäß durch die Merkmale des Anspruchs 1 gelöst. Der erfindungsgemäße Halter weist einen Auffangbehälter für Flüssigkeit auf, die aus einem in den Halter eingestellten Getränkebehälter überschwappt, Der Auffangbehälter ist entnehmbar in die Aufnahme des Halters eingesetzt. Zur Reinigung wird der Auffangbehälter entnommen und lässt sich dadurch einfach reinigen. Es ist auch möglich, den Auffangbehälter in einer Spülmaschine zu reinigen. Die Reinigung ist dadurch erheblich vereinfacht. Des weiteren vermeidet der erfindungsgemäße Auffangbehälter, dass aus einem in den Halter eingestellten Getränkebehälter überschwappende Flüssigkeit an eine Mechanik oder an sonstige schlecht zugängliche Stellen des Halters gelangt.

Zur Anpassung an unterschiedliche Durchmesser von Getränkebehältern schlägt die Erfindung weiterhin vor, dass die Aufnahme mindestens ein Durchmesserausgleichselement aufweist, das mit einer Führung seitlich in die Aufnahme hineinbewegbar geführt ist, so dass eine lichte Weite der Aufnahme einstellbar ist, und dass der Auffangbehälter eine Durchtrittsöffnung für das Durchmesserausgleichselement aufweist.

Der erfindungsgemäße Auffangbehälter ist bspw. topf- oder wannenförmig, er bildet eine Art Übergefäß, in das der Getränkebehälter eingestellt wird und das aus dem Getränkebehälter überschwappende Flüssigkeit auffängt.

Vorzugsweise weist der Auffangbehälter eine Höhe auf, die in etwa einer Tiefe der Aufnahme für den Getränkebehälter entspricht.

Eine Weiterbildung der Erfindung sieht einen Abweiser vor, der ein in die Aufnahme des Halters ragendes Durchmesserausgleichselement beim Entnehmen und/oder beim Einsetzen des Auffangbehälters in die Aufnahme zur Seite drückt. Der Abweiser kann bspw. eine Kante oder Schrägfläche am Auffangbehälter und/oder am Durchmesserausgleichselement sein. Insbesondere bei einem federbeaufschlagt in die Aufnahme des Halters hineinbewegten Durchmesserausgleichselement ermöglicht diese Ausgestaltung der Erfindung ein einfaches Entnehmen und Einsetzen des Auffangbehälters aus der bzw. in die Aufnahme des Halters.

Die Erfindung wird nachfolgend anhand zweier in der Zeichnung dargestellter Ausführungsbeispiele näher erläutert. Es zeigen:
- Figur 1: einen erfindungsgemäßen Halter für einen Getränkebehälter in perspektivischer Darstellung;
- Figur 2: den Halter aus Figur 1 mit teilweise entnommenem Auffangbehälter;
- Figur 3: einen Schnitt des Halters aus Figur 1;
- Figur 4: einen Schnitt des Halters aus Figur 2;
- Figur 5: ein zweites Ausführungsbeispiel eines erfindungsgemäßen Halters für einen Getränkebehälter in perspektivischer Darstellung;
- Figur 6: den Halter aus Figur 5 mit teilweise entnommenem Auffangbehälter;
- Figur 7: einen Teilschnitt des Halters aus Figur 6; und
- Figur 8: einen Teilschnitt des Halters aus Figur 7.

Die Erfindung ist nicht auf die dargestellten Aufführungsformen von Haltern für Getränkebehälter beschränkt, sie lässt sich grundsätzlich an beliebigen derartigen Haltern verwirklichen.

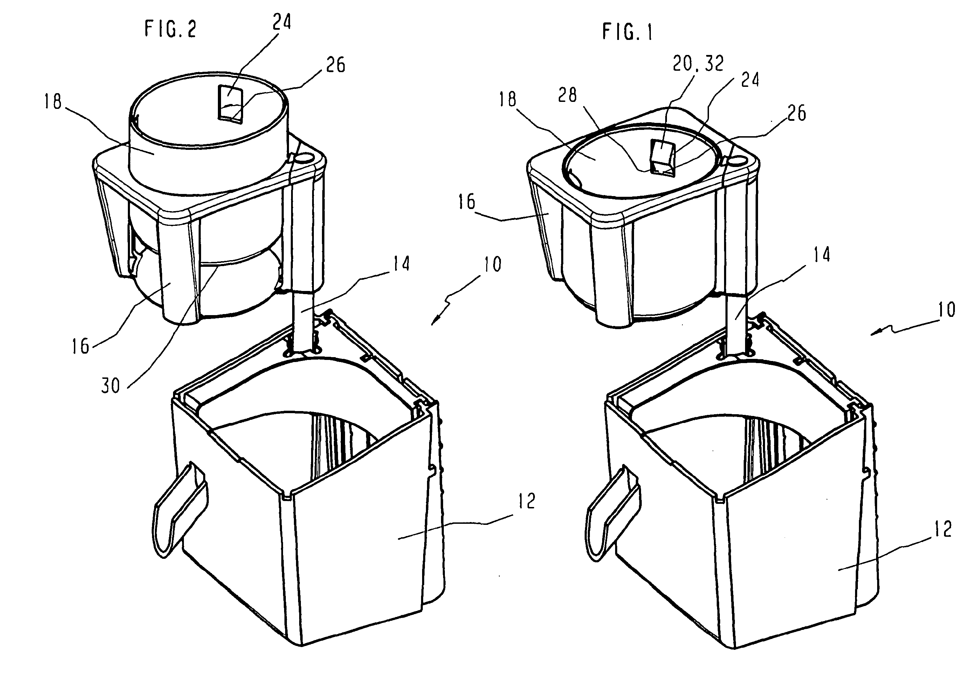

Der in Figur 1 dargestellte, erfindungsgemäße Halter 10 ist zur Aufnahme und zum Halten eines nicht dargestellten Getränkebehälters in einem Kraftwagen vorgesehen. Der Halter 10 weist einen klotzförmigen, oben offenen Grundkörper 12 auf, der in eine Einbauöffnung des Kraftwagens einbaubar ist. Mittels einer Teleskopführung 14 ist eine Aufnahme 16 nach oben ausfahrbar und zur Seite schwenkbar am Grundkörper 12 angebracht. In die Aufnahme 16 ist ein topfförmiger Auffangbehälter 18 eingesetzt. In den Auffangbehälter 18 ist ein Getränkebehälter, bspw. ein Becher, eine Tasse oder eine Getränkedose, einstellbar, um den Getränkebehälter während einer Fahrt kippsicher im nicht dargestellten Kraftwagen zu halten. Während einer Fahrt oder beim Einstellen des Getränkebehälters überschwappende Flüssigkeit wird vom Auffangbehälter 18 aufgenommen. Der Auffangbehälter 18 verhindert dadurch, dass Flüssigkeit aus dem Getränkebehälter in die Mechanik oder an sonstige schlecht zugängliche Stellen des Halters 10 gelangt.

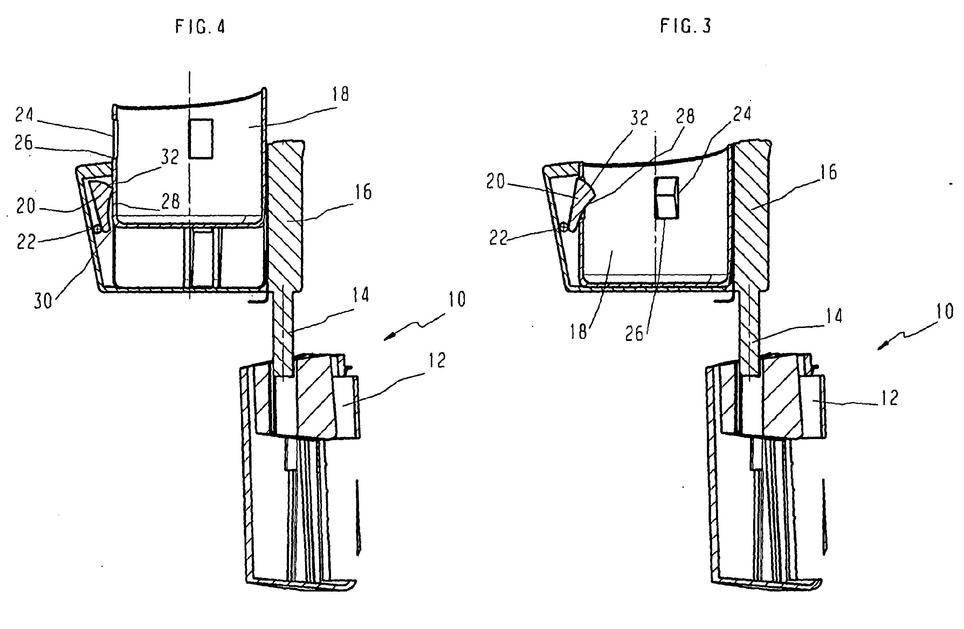

Die Aufnahme 16 des Halters 10 weist Durchmesserausgleichselemente 20 auf, die schwenkbar an der Aufnahme 16 gelagert sind, und von als Schenkelfedern 22 (Figur 3) ausgebildeten Federelementen in die Aufnahme 16 gedrückt werden. Der Auffangbehälter 18 weist rechteckige Aussparungen 24 als Durchtrittsöffnungen für die Durchmesserausgleichselemente 20 auf. Die Durchmesserausgleichselemente 20 verkleinern eine lichte Weite der Aufnahme 16 und passen diese einem eingestellten Getränkebehälter an.

Der Auffangbehälter 18 ist, wie in Figuren 2 und 4 dargestellt, aus der Aufnahme 16 des Halters 10 entnehmbar indem er nach oben herausgezogen wird. Der Auffangbehälter 18 lässt sich dadurch in einfacher Weise reinigen, er kann bspw. auch in eine Spülmaschine eingestellt werden. Beim Entnehmen des Auffangbehälters 18 gleitet ein unterer Rand 26 der Aussparung 24 an einer schräg nach unten gerichteten Innenfläche 28 der Durchmesserausgleichselemente 20 entlang und drückt diese gegen die Kraft der Schenkelfedern 22 nach außen (Figur 4), so dass der Auffangbehälter 18 aus der Aufnahme 16 entnehmbar ist.

Beim Einsetzen des Auffangbehälters 18 in die Aufnahme 16 gleitet ein unterer Rand 30 des Auffangbehälters 18 an einer schräg nach oben gerichteten Fläche 32 der Durchmesserausgleichselemente 20 entlang und drückt dabei die Durchmesserausgleichselemente 20 gegen die Kraft der Schenkelfedern 22 nach außen, so dass der Auffangbehälter 18 in die Aufnahme 16 einsetzbar ist. Die schräg nach unten gerichtete Innenfläche 28 und die schräg nach oben gerichtete Fläche 32 bilden Abweiser, die im Zusammenwirken mit dem unteren Rand 26 der Aussparung 24 bzw. dem unteren Rand 30 des Auffangbehälters 18 die Durchmesserausgleichselemente 20 gegen die Kraft der Schenkelfedern 20 zur Seite drücken, so dass der Auffangbehälter 18 aus der Aufnahme 16 entnommen und wieder eingesetzt werden kann.

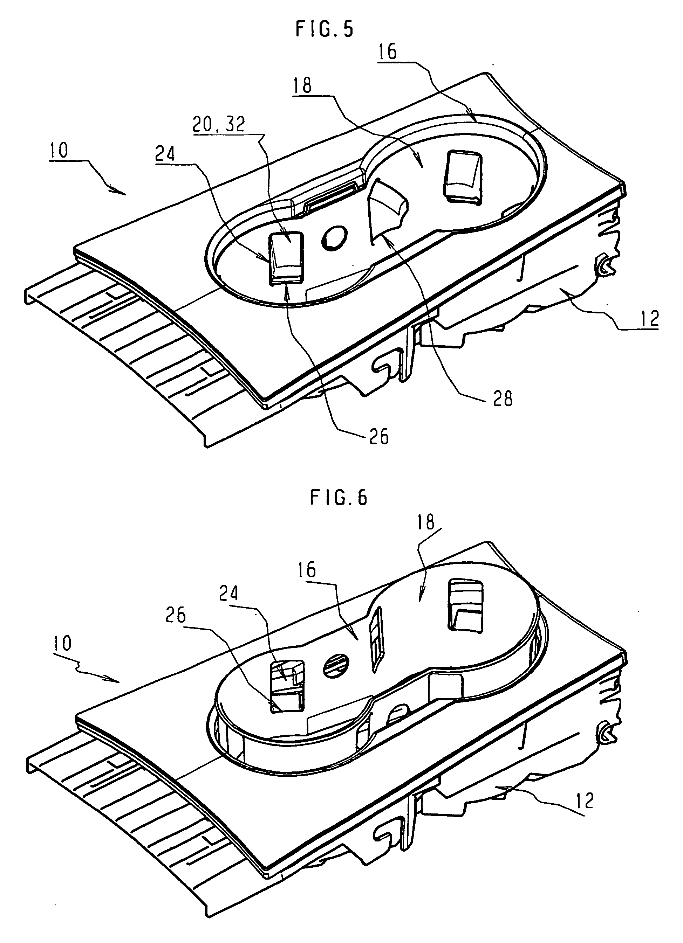

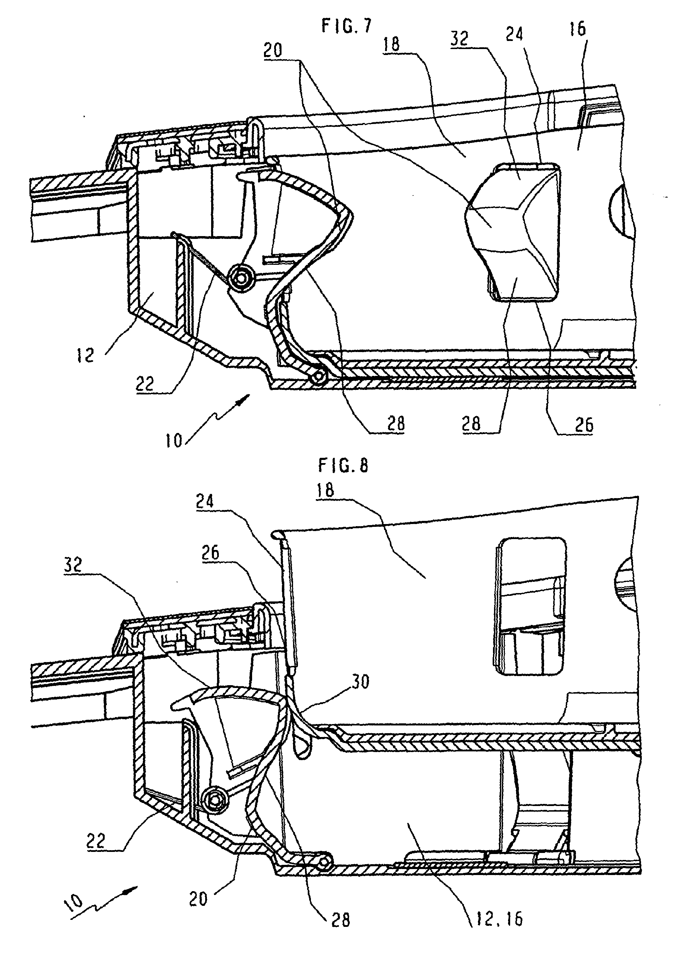

Figuren 5 bis 8 zeigen eine zweite Ausführungsführungsform eines erfindungsgemäßen Halters 10. Zu seiner Erläuterung werden nachfolgend für mit Figuren 1 bis 4 übereinstimmende Bauteile die gleichen Bezugszeichen verwendet. Der in Figuren 5 bis 8 dargestellte Halter 10 weist eine in Draufsicht knochenförmige Vertiefung als Aufnahme 16 zum Einstellen von zwei nicht dargestellten Getränkebehältern nebeneinander auf. In die Aufnahme 16 ist eine in Draufsicht ebenfalls knochenförmige Wanne als Auffangbehälter 18 eingesetzt. Der Auffangbehälter 18 ist in Form und Größe passend zur Aufnahme 16.

Auch der in Figuren 5 bis 8 dargestellte Halter 10 weist schwenkbar am Grundkörper 12 gelagerte Durchmesserausgleichselemente 20 auf, die von Schenkelfedern 22 in die Aufnahme 16 hineingedrückt werden. Die Auffangwanne 18 ist mit Aussparungen 24 versehen, durch die die Durchmesserausgleichselemente 20 nach innen in die Aufnahme 16 ragen.

Zum Entnehmen wird der Auffangbehälter 18 nach oben aus der Aufnahme 16 des Grundkörpers 12 herausgezogen. Dabei gleiten untere Ränder 26 der Aussparungen 24 an schräg nach unten gerichteten Innenflächen 28 der Durchmesserausgleichselemente 20 entlang und drücken diese gegen die Kraft der Schenkelfedern 22 aus den Aussparungen 24 heraus nach außen. Beim Einsetzen des Auffangbehälters 18 in die Aufnahme 16 gleitet ein unterer Rand 30 des Auffangbehälters 18 an einer schräg nach oben stehenden Fläche 32 der Durchmesserausgleichselemente 20 entlang und drückt diese gegen die Kraft der Schenkelfedern 22 nach außen, so dass der Auffangbehälter 18 in die Aufnahme 16 des Halters 10 eingesetzt werden kann. Die schräg nach unten gerichteten Innenflächen 28 und die schräg nach oben gerichteten Flächen 32 der Durchmesserausgleichselemente 20 bilden also auch hier Abweiser, die die Durchmesserausgleichselemente 20 beim Entnehmen und beim Einsetzen des Auffangbehälters 18 gegen die Kraft der Schenkelfedern 22 nach außen drücken.

## Patentansprüche

1. Halter für einen Getränkebehälter, mit einer Aufnahme zum Einstellen des Getränkebehälters, wobei der Halter (10) einen Auffangbehälter (18) für Flüssigkeit aufweist, die aus einem in die Aufnahme (16) eingestellten Getränkebehälter überschwappt, wobei der Auffangbehälter (18) entnehmbar in die Aufnahme (16) des Halters (10) eingesetzt ist, wobei die Aufnahme (16) mindestens ein Durchmesserausgleichselement (20) aufweist, das mit einer Führung seitlich in die Aufnahme (16) hineinbewegbar geführt ist, so dass eine lichte Weite der Aufnahme (16) einstellbar ist, und wobei der Auffangbehälter (18) eine Durchtrittsöffnung (24) für das Durchmesserausgleichselement (20) aufweist, und wobei die Führung keine Führungsbahnen aufweist.

2. Halter nach Anspruch 1, **dadurch gekennzeichnet, dass** der Auffangbehälter (18) topf- oder wannenförmig ist.

3. Halter nach Anspruch 1, **dadurch gekennzeichnet, dass** der Auffangbehälter (18) eine Höhe aufweist, die in etwa einer Tiefe der Aufnahme (16) für den Getränkebehälter entspricht.

4. Halter nach Anspruch 1, **dadurch gekennzeichnet, dass** der Auffangbehälter (18) und/oder das Durchmesserausgleichselement (20) einen Abweiser (26, 28, 30, 32) aufweist, der das Durchmesserausgleichselement (20) beim Entnehmen des Auffangbehälters (18) aus der Aufnahme (16) und/oder beim Wiedereinsetzen des Auffangbehälters (18) in die Aufnahme (16) zur Seite drückt.

## Claims

1. Holder for a drinks container, having a receptacle for insertion of the drinks container, the holder (10) having a collecting container (18) for liquid overflowing from a drinks container inserted into the receptacle (16), the collecting container (18) being installed removably in the receptacle (16) of the holder (10), the receptacle (16) having at least one diameter-compensating element (20), which is guided with a guide means so as to be movable laterally into the receptacle (16) so that the inside width of the receptacle (16) is adjustable, and the collecting container (18) having an opening (24) for the diameter-compensating element (20), and the guide means having no guideways.

2. Holder according to claim 1, **characterized in that** the collecting container (18) is cup-shaped or trough-shaped.

3. Holder according to claim 1, **characterized in that** the collecting container (18) has a height corresponding approximately to the depth of the receptacle (16) for the drinks container.

4. Holder according to claim 1, **characterized in that** the collecting container (18) and/or the diameter-compensating element (20) has a deflector (26, 28, 30, 32) which presses the diameter-compensating element (20) to the side when the collecting container (18) is being removed from the receptacle (16) and/or when the collecting container (18) is being re-inserted into the receptacle (16).

## Revendications

1. Support pour un récipient à boissons, avec un réceptacle pour placer un récipient à boissons, sachant que le support (10) présente un récipient (18) de récupération du liquide qui déborde d'un récipient à boissons placé dans le réceptacle (16), sachant que le récipient de récupération (18) est inséré de façon amovible dans le réceptacle (16) du support (10), sachant que le réceptacle (16) comporte au moins un élément (20) de compensation de diamètre qui, à l'aide d'un guide, est introduit latéralement à l'intérieur du réceptacle (16) de telle sorte qu'il est possible de régler un diamètre intérieur du réceptacle (16), sachant que le récipient de récupération (18) présente une ouverture de passage (24) pour l'élément (20) de compensation de diamètre et sachant que le guide ne présente pas de glissières.

2. Support selon la revendication 1, **caractérisé en ce que** le récipient de récupération (18) est en forme de pot ou de bac.

3. Support selon la revendication 1, **caractérisé en ce que** le récipient de récupération (18) présente une hauteur qui correspond environ à une profondeur du réceptacle (16) pour le récipient à boissons.

4. Support selon la revendication 1, **caractérisé en ce que** le récipient de récupération (18) et/ou l'élément (20) de compensation de diamètre présentent un déflecteur (26, 28, 30, 32) qui repousse sur le côté l'élément (20) de compensation de diamètre lorsqu'on retire le récipient de récupération (18) du réceptacle (16) et/ou lorsqu'on replace le récipient de récupération (18) dans le réceptacle (16).
